# EUROPÄISCHE PATENTANMELDUNG

(11) **EP 2 607 138 A1**
(43) Veröffentlichungstag der Anmeldung: **26.06.2013**
(21) Anmeldenummer: 12007177.4
(22) Anmeldetag: 17.10.2012
(51) Int. Cl.: B60K 23/02, B60R 21/09, B60T 7/06, G05G 1/32, G05G 1/40

(54) **Verstellbares schienengeführtes Fußhebelwerk für ein Kraftfahrzeug**

(30) Priorität: 22.12.2011 DE 102011121924
(71) Anmelder: AUDI AG, 85045 Ingolstadt (DE)
(72) Erfinder: Kräuter, Thomas, DE - 85080 Gaimersheim (DE)
(74) Vertreter: Engelhardt, Harald

(57) **Zusammenfassung**

Die Erfindung betrifft ein verstellbares Fußhebelwerk für ein Kraftfahrzeug, umfassend einen Pedalblock mit stehend angeordneten Pedalen, die schwenkbar um eine Pedalachse im Pedalblock gelagert sind, wobei der Pedalblock schienengeführt, gegenüber der Kraftfahrzeugkarosserie in Kraftfahrzeuglängsrichtung verschiebbar ist und über Verriegelungsmittel in verschiedenen Positionen arretierbar ist. Die Erfindung zeichnet sich dadurch aus, dass die Verriegelungsmittel derart ausgebildet und/oder dimensioniert sind, dass bei Überschreiten einer vorgegebenen, auf die Verriegelungsmittel wirkenden Maximalkraft die Verriegelungsmittel entriegeln.

## Beschreibung

Die Erfindung betrifft ein verstellbares Fußhebelwerk für ein Kraftfahrzeug gemäß der im Oberbegriff des Patentanspruches 1 angegebenen Art.

Bei Fahrzeugen ohne Sitzverstellung müssen zur Erreichung einer optimalen Sitzposition die Pedalerie und die Lenkradlage einstellbar sein. In Bezug auf die Pedalerie ist es bekannt, hierfür ein schienengeführtes, verstellbares Fußhebelwerk mit stehenden Pedalen zu verwenden. Lediglich beispielhaft wird hier auf den Sportwagen KTM X-Bow verwiesen.

Als nachteilig erweist sich hierbei, dass im Falle eines Frontalcrashes der Crashimpuls über das schienengeführte, verstellbare Fußhebelwerk direkt an die Beine des Fahrers weitergegeben wird, was zu erheblichen Verletzungen führen kann.

Ein aus dem Stand der Technik bekanntes "Nachgeben" der Pedale im Crashfall, wie dies z.B. bei hängenden Pedalen geläufig ist, ist bei stehenden Pedalen nicht möglich.

Der Erfindung liegt die Aufgabe zugrunde, ein verstellbares, schienengeführtes Fußhebelwerk für ein Kraftfahrzeug gemäß der im Oberbegriff des Patentanspruches 1 angegebenen Art derart weiterzubilden, dass im Crashfall das Verletzungsrisiko für den Fahrer reduziert wird.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst das verstellbare Fußhebelwerk für ein Kraftfahrzeug einen Pedalblock mit stehend angeordneten Pedalen, die schwenkbar um eine Pedalachse im Pedalblock gelagert sind. Der Pedalblock ist seinerseits schienengeführt, gegenüber der Kraftfahrzeugkarosserie in Kraftfahrzeuglängsrichtung verschiebbar gelagert und über Verriegelungsmittel in verschiedenen Positionen arretierbar.

Erfindungsgemäß sind die Verriegelungsmittel derart ausgebildet und/oder dimensioniert, dass bei Überschreiben einer vorgegebenen, auf die Verriegelungsmittel wirkenden Maximalkraft, die Verriegelungsmittel selbsttätig entriegeln.

In vorteilhafter Weise ist es nunmehr möglich auch in Fahrzeugen ohne Sitzverstellung im Crashfall das Verletzungsrisiko für den Fahrer zu minimieren, da im Crashfall bei Überschreitung der definierten Maximalkraft erfindungsgemäß die Verriegelung des schienengeführten Pedalblocks freigegeben wird, mit der Folge, dass weniger Energie an die Beine des Fahrers weitergegeben wird, so dass ein verbesserter Insassenschutz gewährleistet ist.

Gemäß einer ersten Ausführungsform der Erfindung sind die Verriegelungsmittel als ein zwischen Schiene und Pedalblock wirkender Klemmmechanismus ausgebildet. Hierbei ist die wirkende Klemmkraft zwischen Schiene und Pedalblock derart dimensioniert, dass diese gleich der vorgegebenen Maximalkraft ist, so dass im Crashfall bei Überschreiten der Maximalkraft die Klemmkraft überwunden ist und der Pedalblock freigeben ist. Diese Ausführungsform erweist sich aufgrund ihrer konstruktiven Einfachheit und der damit verbunden kostengünstigen Realisierung als vorteilhaft.

Gemäß einer anderen Ausführungsform der Erfindung umfassen die Verriegelungsmittel einen zwischen Schiene und Pedalblock wirkenden Bolzen. Der Bolzen ist hierbei so dimensioniert, dass dieser im Crashfall bei Überschreiten der Maximalkraft bricht. Dies hat wiederum zur Folge, dass der Pedalblock freigeben ist. Die Verwendung eines als Sollbruchstelle wirkenden Bolzens erweist sich als vorteilhaft, da aufgrund des formschlüssigen Eingriffs des Bolzens zwischen Schiene und Pedalbock eine hohe Betriebssicherheit gewährleistet ist.

Gemäß einer dritten Ausführungsform der Erfindung sind die Verriegelungsmittel in Form eines federbelasteten Formschluss zweier verzahnter Elemente zwischen Schiene und Pedalblock ausgebildet. Hierbei ist die Verzahnungsgeometrie und die Federbelastung derart ausgebildet und dimensioniert, dass im Crashfall und bei Überschreiten Maximalkraft die Kraft der Federbelastung überwunden wird und die verzahnten Elemente gegeneinander verschiebbar sind, so dass der Pedalblock freigegeben wird. Diese Ausführungsform erweist sich aufgrund der einfach auszuführenden, annährend stufenlos Verstellbarkeit als besonders vorteilhaft.

Zusammenfassend bedeutet dies, dass durch die erfindungsgemäße Ausgestaltung des verstellbaren, schienengeführten Fußhebelwerk nunmehr auch für Fahrzeuge ohne Sitzverstellung ein verbesserter Insassenschutz im Falle eines Frontalcrashes gewährleistet ist.

## Patentansprüche

1. Verstellbares Fußhebelwerk für ein Kraftfahrzeug, umfassend einen Pedalblock mit stehend angeordneten Pedalen, die schwenkbar um eine Pedalachse im Pedalblock gelagert sind, wobei der Pedalblock schienengeführt, gegenüber der Kraftfahrzeugkarosserie in Kraftfahrzeuglängsrichtung verschiebbar ist und über Verriegelungsmittel in verschiedenen Positionen arretierbar ist, **dadurch gekennzeichnet, dass** die Verriegelungsmittel derart ausgebildet und/oder dimensioniert sind, dass bei Überschreiten einer vorgegebenen, auf die Verriegelungsmittel wirkenden Maximalkraft die Verriegelungsmittel entriegeln.

2. Verstellbares Fußhebelwerk nach Patentanspruch 1, **dadurch gekennzeichnet, dass** die Verriegelungsmittel als ein zwischen Schiene und Pedalblock wirkender Klemmmechanismus ausgebildet sind, deren Klemmkraft gleich der Maximalkraft ist.

3. Verstellbares Fußhebelwerk nach Patentanspruch 1, **dadurch gekennzeichnet, dass** die Verriegelungsmittel einen zwischen Schiene und Pedalblock wirkender Bolzen umfassen, der bei Maximalkraft bricht.

4. Verstellbares Fußhebelwerk nach Patentanspruch 1, **dadurch gekennzeichnet, dass** die Verriegelungsmittel in Form eines federbelasteten Formschluss zweier verzahnten Elemente zwischen Schiene und Pedalblock ausgebildet sind, wobei die Verzahnungsgeometrie und die Federbelastung derart ausgebildet und dimensioniert sind, dass bei Maximalkraft die Kraft der Federbelastung überwunden und die verzahnten Elemente gegeneinander verschiebbar sind.
